# EUROPEAN PATENT SPECIFICATION

(11) **EP 3 042 527 B1**
(45) Date of publication and mention of the grant of the patent: **02.01.2019**
(21) Application number: 14771678.1
(22) Date of filing: 03.09.2014
(51) Int. Cl.: H04W 52/02, H04W 76/28, H04W 36/00, H04W 36/30

(54) **DEVICES AND METHODS FOR DECREASING AWAKE STATE DURATIONS IN ACCESS TERMINALS OPERATING IN A SLOTTED IDLE MODE**
VORRICHTUNGEN UND VERFAHREN ZUR VERMINDERUNG DER DAUER VON WACHZUSTÄNDEN BEI ZUGANGSENDGERÄTEN MIT BETRIEB IN EINEM ZEITSCHLITZRUHEMODUS
DISPOSITIFS ET PROCÉDÉS POUR DIMINUER LES DURÉES D'ÉTAT D'ÉVEIL DANS DES TERMINAUX D'ACCÈS FONCTIONNANT DANS UN MODE REPOS À CRÉNEAU

(30) Priority: 06.09.2013 US 201314020590
(43) Date of publication of application: 13.07.2016
(73) Proprietor: Qualcomm Incorporated, San Diego, CA 92121-1714 (US)
(72) Inventor: LIN, Lijun, San Diego, CA 92121-1714 (US); GANTI, Kamalakar, San Diego, CA 92121-1714 (US)
(74) Representative: Tomkins & Co
(86) International application number: PCT/US2014/053853
(87) International publication number: WO 2015/034894

(56) References cited:
- EP-A1- 1 841 249
- EP-A1- 2 519 060

## Description

### CROSS-REFERENCE TO RELATED APPLICATIONS

This application claims priority to and the benefit of U.S. non-provisional patent application no. 14/020,590 filed in the United States Patent and Trademark Office on September 6, 2013.

### TECHNICAL FIELD

The technology discussed below relates generally to wireless communications, and more specifically to methods and devices for dynamically increasing sleep state times in access terminals operating in a slotted idle mode. Implementation of aspects and features of the present disclosure can lead to power savings.

### BACKGROUND

Wireless communications systems are widely deployed to provide various types of communication content such as voice, video, packet data, messaging, broadcast, and so on. These systems may be accessed by various types of devices adapted to facilitate wireless communications, where multiple devices share the available system resources (e.g., time, frequency, and power). Examples of such wireless communications systems include code-division multiple access (CDMA) systems, time-division multiple access (TDMA) systems, frequency-division multiple access (FDMA) systems and orthogonal frequency-division multiple access (OFDMA) systems.

Multiple types of devices are adapted to utilize such wireless communications systems. These devices may be generally referred to as access terminals. Access terminals are becoming increasingly popular, with consumers often using power-hungry applications that run on such access terminals. Access terminals are typically battery-powered and the amount of power a battery can provide between charges is generally limited. Accordingly, features may be desirable to improve the battery life between charges in access terminals.//Insert page 1A here.
EP 1 841 249 A1 discloses a method and apparatus for performing a Discontinuous Reception (DRX) operation of a connected User Equipment (UE) in a mobile communication system are provided. For a packet service, adjusting an active period length according to the requirements of traffic at a reception time provides a DRX operation. Also, the UE enters into a sleep mode after confirming successful reception of packets including retransmission packets and sending an RLC ACK signal for the packets.

EP 2 519 060 A1 discloses a method of adjusting a power saving mode of user equipment operating in a wireless communication network, a computer program product and base station operable to perform that method. The power saving mode comprises a discontinuous reception and/or transmission mode according to which user equipment periodically switches, according to a first predetermined scheme, between a first state in which data packets may be communicated between the user equipment and the network and a second state in which data packets cannot be communicated between the user equipment and the network. The method comprises: determining that there is data traffic to be communicated between the user equipment and the network; assessing whether the data traffic can be communicated within the first predetermined scheme in accordance with at least one predetermined efficiency target; and if not: adjusting at least one operational parameter of the first predetermined scheme to move communication of the data traffic between the user equipment and the network towards the at least one predetermined efficiency target. Accordingly, a flexible discontinuous communication scheme may enhance power saving performance for smartphones, thus offering better operator service and better customer experience.

### BRIEF SUMMARY OF SOME EXAMPLES

The following summarizes some aspects of the present disclosure to provide a basic understanding of the discussed technology. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later.

Various examples and implementations of the present disclosure facilitate power conservation by dynamically reducing the duration of awake states (and increasing sleep state duration) during slotted idle modes.

According to at least one aspect of the disclosure, access terminals may include a communications interface with a receiver circuit, and may be coupled with a processing circuit. The processing circuit may be adapted to determine an offset corresponding to a time difference between a beginning of a first slot cycle and receipt of a first packet. The processing circuit may further cause the receiver circuit to be powered on in a second slot cycle after the first slot cycle, at a time corresponding to the offset after a beginning of the second slot cycle.

Further aspects provide methods operational on access terminals and/or access terminals including means to perform such methods. One or more examples of such methods may include determining an offset corresponding to a time difference between a beginning of a preceding idle mode slot cycle and receipt of a transmission. A receiver circuit may be powered on in one or more subsequent idle mode slot cycles at a time corresponding to the determined offset after the beginning of each subsequent slot cycle.

Still further aspects include processor-readable storage mediums comprising programming executable by a processing circuit. According to one or more examples, such programming may be adapted for causing the processing circuit to determine an offset corresponding to a time difference between a beginning of a preceding idle mode slot cycle and receipt of a transmission. The programming may further be adapted for causing the processing circuit to cause a receiver circuit to be powered on in one or more subsequent idle mode slot cycles at a time corresponding to the determined offset after a beginning of each subsequent slot cycle.

Other aspects, features, and embodiments associated with the present disclosure will become apparent to those of ordinary skill in the art upon reviewing the following description in conjunction with the accompanying figures.

### DRAWINGS

FIG. 1 is a block diagram of a network environment in which one or more aspects of the present disclosure may find application.
FIG. 2 is a block diagram illustrating portions of two 256-slot synchronous control channel (SCC) cycles according to at least one example of a slotted idle mode.
FIG. 3 is a block diagram depicting different slot cycles and receiver power timing according to at least one general example for reducing the duration of the awake state.
FIG. 4 is a block diagram illustrating select components of an access terminal adapted to facilitate one or more features of the present disclosure according to some embodiments.
FIG. 5 is a flow diagram illustrating a method operational on an access terminal according to some implementations.

### DETAILED DESCRIPTION

The description set forth below in connection with the appended drawings is intended as a description of various configurations and is not intended to represent the only configurations in which the concepts and features described herein may be practiced. The following description includes specific details for the purpose of providing a thorough understanding of various concepts. However, it will be apparent to those skilled in the art that these concepts may be practiced without these specific details. In some instances, well known circuits, structures, techniques and components are shown in block diagram form to avoid obscuring the described concepts and features.

The various concepts presented throughout this disclosure may be implemented across a broad variety of telecommunication systems, network architectures, and communication standards. Certain aspects of the disclosure are described below for and 3rd Generation Partnership Project 2 (3GPP2) protocols and systems (e.g., Ix EV-DO), and related terminology may be found in much of the following description. However, those of ordinary skill in the art will recognize that one or more aspects of the present disclosure may be employed and included in one or more other wireless communication protocols and systems.

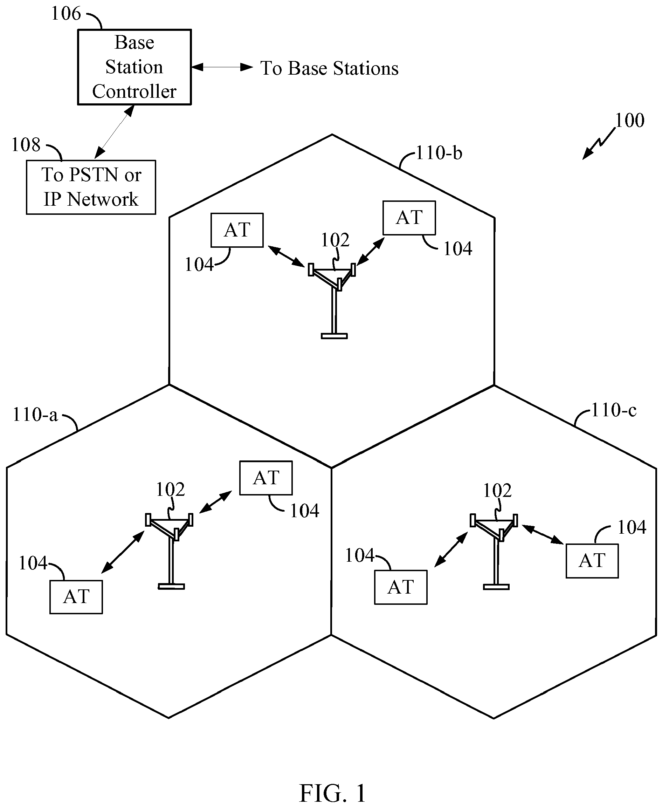

Referring now to FIG. 1, a block diagram of a network environment in which one or more aspects of the present disclosure may find application is illustrated. The wireless communication system 100 generally includes one or more base stations 102, one or more access terminals 104, one or more base station controllers (BSC) 106, and a core network 108 providing access to a public switched telephone network (PSTN) (e.g., via a mobile switching center/visitor location register (MSC/VLR)) and/or to an IP network (e.g., via a packet data switching node (PDSN)). The system 100 may support operation on multiple carriers (waveform signals of different frequencies). Multi-carrier transmitters can transmit modulated signals simultaneously on the multiple carriers. Each modulated signal may be a CDMA signal, a TDMA signal, an OFDMA signal, a Single Carrier Frequency Division Multiple Access (SC-FDMA) signal, etc. Each modulated signal may be sent on a different carrier and may carry control information (e.g., pilot signals), overhead information, data, etc.

The base stations 102 can wirelessly communicate with the access terminals 104 via a base station antenna. The base stations 102 may each be implemented generally as a device adapted to facilitate wireless connectivity (for one or more access terminals 104) to the wireless communications system 100. A base station 102 may also be referred to by those skilled in the art as an access point, a base transceiver station (BTS), a radio base station, a radio transceiver, a transceiver function, a basic service set (BSS), an extended service set (ESS), a Node B, a femto cell, a pico cell, and/or some other suitable terminology.

The base stations 102 are configured to communicate with the access terminals 104 under the control of the base station controller 106. Each of the base stations 102 can provide communication coverage for a respective geographic area. The coverage area 110 for each base station 102 here is identified as cells 110-a, 110-b, or 110-c. The coverage area 110 for a base station 102 may be divided into sectors (not shown, but making up only a portion of the coverage area). In various examples, the system 100 may include base stations 102 of different types.

One or more access terminals 104 may be dispersed throughout the coverage areas 110. Each access terminal 104 may communicate with one or more base stations 102. An access terminal 104 may generally include one or more devices that communicate with one or more other devices through wireless signals. Such an access terminal 104 may also be referred to by those skilled in the art as a user equipment (UE), a mobile station (MS), a subscriber station, a mobile unit, a subscriber unit, a wireless unit, a remote unit, a mobile device, a wireless device, a wireless communications device, a remote device, a mobile subscriber station, a mobile terminal, a wireless terminal, a remote terminal, a handset, a terminal, a user agent, a mobile client, a client, or some other suitable terminology. An access terminal 104 may include a mobile terminal and/or an at least substantially fixed terminal. Examples of an access terminal 104 include a mobile phone, a pager, a wireless modem, a personal digital assistant, a personal information manager (PIM), a personal media player, a palmtop computer, a laptop computer, a tablet computer, a television, an appliance, an e-reader, a digital video recorder (DVR), a machine-to-machine (M2M) device, meter, entertainment device, router, and/or other communication/computing device which communicates, at least partially, through a wireless or cellular network.

An access terminal 104 operating within the wireless communications system 100 may employ various operating modes, including a connected (or traffic) mode and an idle (or standby) mode. In connected mode, the access terminal 104 may actively exchange data (e.g., voice or data calls or sessions) with one or more base stations 102. In idle mode, the access terminal 104 is generally not actively exchanging data, but may monitor control channels to facilitate updates, enable mobility (e.g., handing over to the best proximate base station 102), and to enable paging and incoming calls, among other functions.

When operating in the idle mode, the access terminal can conserve power by periodically monitoring the control channels in a slotted idle mode, instead of monitoring the control channels continuously. The slotted idle mode may also be referred to by those of skill in the art as discontinuous reception mode or DRX mode. In the slotted idle mode, the access terminal 104 periodically wakes up from a "sleep" state and enters an "awake" state by powering on its receiver circuitry at known time intervals and processes a control channel for messages scheduled to be transmitted from the base station(s) 102. If additional communication is not required, the access terminal 104 can revert back to the sleep state until the next designated time.

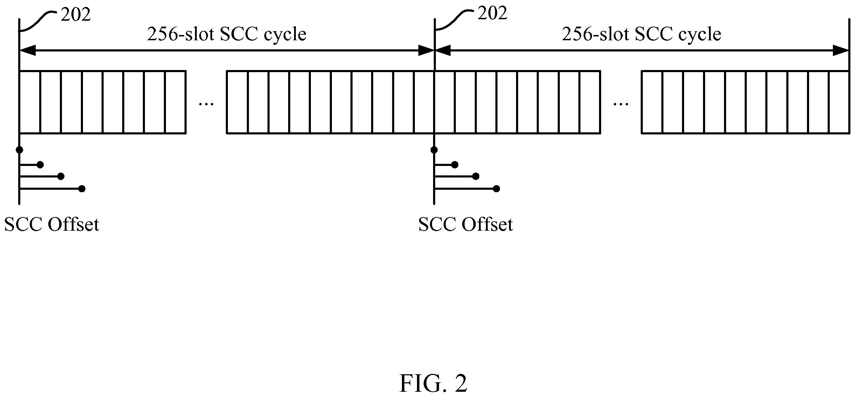

FIG. 2 is a block diagram illustrating portions of two 256-slot synchronous control channel (SCC) cycles according to at least one example of a slotted idle mode. In a slotted idle mode, the access terminal 104 will typically wake up by powering on its receiver circuitry at the SCC boundary 202 (e.g., at the beginning of the 256-slot SCC cycle) in an effort to receive the first control channel packet transmitted by the base station 102. In some instances, each base station 102 may utilize an offset in the timing from the boundary 202 before the base station 102 transmits the first control channel MAC packet to the access terminal 104. In FIG. 2, this offset is identified as the SCC offset and can be measured by the number of slots after the SCC boundary 202 when the first control channel MAC packet is transmitted by the base station 102. The offset may be any number of slots, although an offset is typically 0, 1, 2, or 3 slots, as shown in the example in FIG. 2.

As noted, the access terminals 104 are typically configured to wake up at the SCC boundary 202. As a result of the offset, however, the access terminal 104 may wake up by powering on the receiver circuitry one or more slots before any data is available for reception. In the slotted idle mode, the amount of time that an access terminal 104 is awake, as opposed to the in-between standby or sleep periods, can be a significant factor affecting the power consumption and standby time for the access terminal 104.

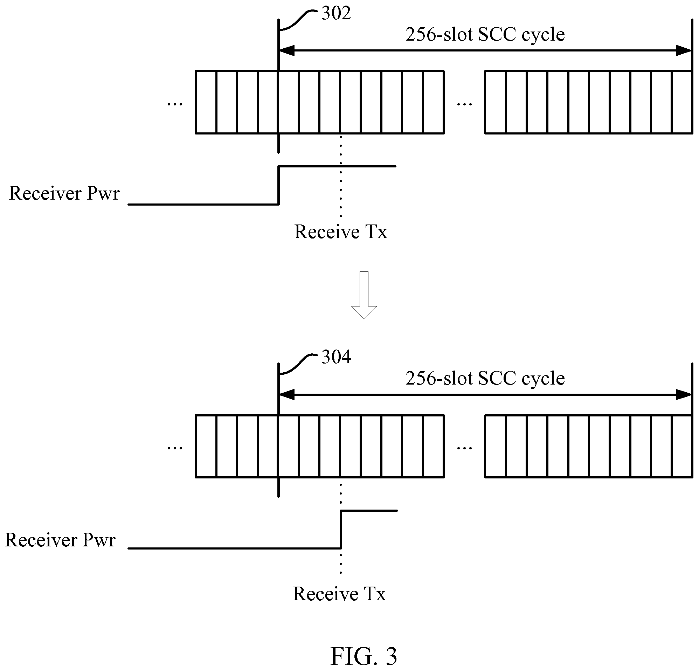

According to at least one aspect of the present disclosure, access terminals are adapted to facilitate power conservation by reducing the duration of the awake state (and similarly increasing the duration of the sleep state) according to the offset associated with a serving base station. For instance, FIG. 3 is a block diagram depicting different slot cycles and receiver power timing according to at least one general example for reducing the duration of the awake state. The slot cycles are shown as a 256-slot SCC cycle, similar to FIG. 2. In this example, the slot cycle on top in FIG. 3 represents a slot cycle that precedes the slot cycle on the bottom in FIG. 3, although not necessarily immediately preceding. Accordingly, the slot cycle diagram on top in FIG. 3 will be referred to as the preceding slot cycle, and the slot cycle diagram on the bottom in FIG. 3 will be referred to as the subsequent slot cycle.

At the preceding slot cycle, an access terminal of the present disclosure operating in a slotted idle mode can wake up at the cycle boundary 302, as is conventional. That is, the access terminal can power up its receiver circuitry to be ready to receive a transmission by the cycle boundary 302. In this example, the base station is shown as employing an offset of three slots. Thus, at the third slot, the access terminal receives a transmission. The access terminal can identify the three-slot offset and, at the subsequent slot cycle, the access terminal can delay powering up the receiver circuitry to be ready to receive a transmission by the beginning of the third slot after the cycle boundary 304 for the subsequent slot cycle.

In general, there is a relatively low probability of a reacquisition handoff to a new base station between consecutive awake states. Accordingly, in most cases, the access terminal will be receiving control channel packets from the same base station, and the same offset will occur in each awake state. The access terminal, therefore, can use the same offset for each awake state. For instance, if the first wake up had a 3-slot offset, the access terminal can determine that it can wake up 3-slots after the beginning of each slot cycle, resulting in a reduction in the duration of the awake state by 3 slots.

There is, however, a possibility that a reacquisition handoff will occur from one awake state to the next. Therefore, according to a further aspect of the present disclosure, access terminals can be adapted to predict whether there will be a reacquisition handoff in the next awake state of the slot cycle based on one or more conditions described in further detail below.

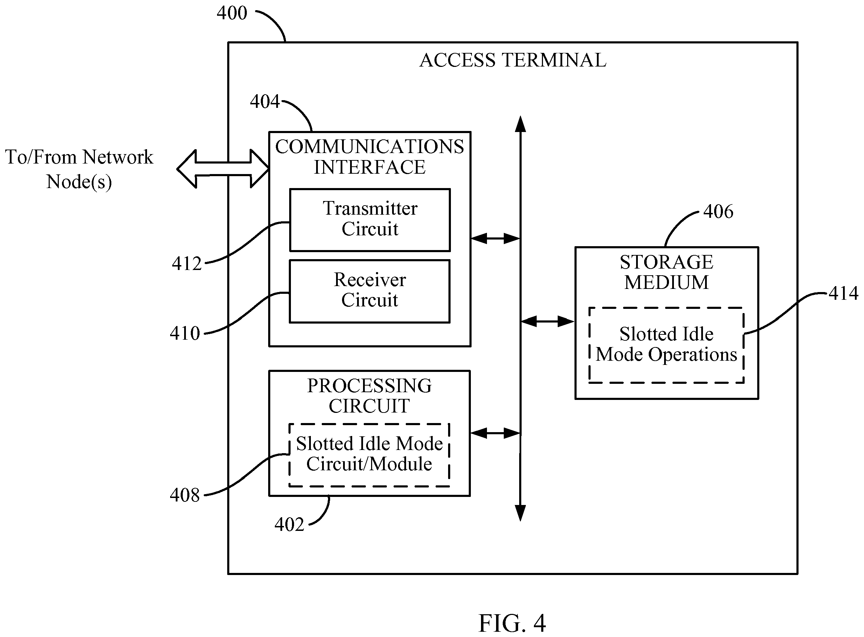

Turning to FIG. 4, a block diagram is shown illustrating select components of an access terminal 400 adapted to facilitate one or more features of the present disclosure according to at least one example. The access terminal 400 includes a processing circuit 402 coupled to or placed in electrical communication with a communications interface 404 and a storage medium 406.

The processing circuit 402 is arranged to obtain, process and/or send data, control data access and storage, issue commands, and control other desired operations. The processing circuit 402 may include circuitry adapted to implement desired programming provided by appropriate media in at least one example. For example, the processing circuit 402 may be implemented as one or more processors, one or more controllers, and/or other structure configured to execute executable programming. Examples of the processing circuit 402 may include a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may include a microprocessor, as well as any conventional processor, controller, microcontroller, or state machine. The processing circuit 402 may also be implemented as a combination of computing components, such as a combination of a DSP and a microprocessor, a number of microprocessors, one or more microprocessors in conjunction with a DSP core, an ASIC and a microprocessor, or any other number of varying configurations. These examples of the processing circuit 402 are for illustration and other suitable configurations within the scope of the present disclosure are also contemplated.

The processing circuit 402 is adapted for processing, including the execution of programming, which may be stored on the storage medium 406. As used herein, the term "programming" shall be construed broadly to include without limitation instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

In some instances, the processing circuit 402 may include a slotted idle mode circuit or module 408. The slotted idle mode circuit or module 408 may include circuitry and/or programming (e.g., programming stored on the storage medium 406) adapted to implement an offset delay prior to powering on receiver circuitry of the communications interface 404 during a slotted idle mode, as described herein.

The communications interface 404 is configured to facilitate wireless communications of the access terminal 400. For example, the communications interface 404 may include circuitry and/or programming adapted to facilitate the communication of information bi-directionally with respect to one or more wireless network devices (e.g., network nodes). The communications interface 404 may be coupled to one or more antennas (not shown), and includes wireless transceiver circuitry, including at least one receiver circuit 410 (e.g., one or more receiver chains) and/or at least one transmitter circuit 412 (e.g., one or more transmitter chains).

The storage medium 406 may represent one or more processor-readable devices for storing programming, such as processor executable code or instructions (e.g., software, firmware), electronic data, databases, or other digital information. The storage medium 406 may also be used for storing data that is manipulated by the processing circuit 402 when executing programming. The storage medium 406 may be any available media that can be accessed by a general purpose or special purpose processor, including portable or fixed storage devices, optical storage devices, and various other mediums capable of storing, containing and/or carrying programming. By way of example and not limitation, the storage medium 406 may include a processor-readable storage medium such as a magnetic storage device (e.g., hard disk, floppy disk, magnetic strip), an optical storage medium (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and/or other mediums for storing programming, as well as any combination thereof.

The storage medium 406 may be coupled to the processing circuit 402 such that the processing circuit 402 can read information from, and write information to, the storage medium 406. That is, the storage medium 406 can be coupled to the processing circuit 402 so that the storage medium 406 is at least accessible by the processing circuit 402, including examples where the storage medium 406 is integral to the processing circuit 402 and/or examples where the storage medium 406 is separate from the processing circuit 402 (e.g., resident in the access terminal 400, external to the access terminal 400, distributed across multiple entities).

Programming stored by the storage medium 406, when executed by the processing circuit 402, causes the processing circuit 402 to perform one or more of the various functions and/or process steps described herein. For example, the storage medium 406 may include slotted idle mode operations 414 adapted to cause the processing circuit 402 to implement an offset delay prior to powering on the receiver circuit 410 during a slotted idle mode, as described herein. Thus, according to one or more aspects of the present disclosure, the processing circuit 402 is adapted to perform (in conjunction with the storage medium 406) any or all of the processes, functions, steps and/or routines for any or all of the access terminals (e.g., access terminal 104, access terminal 400) described herein. As used herein, the term "adapted" in relation to the processing circuit 402 may refer to the processing circuit 402 being one or more of configured, employed, implemented, and/or programmed (in conjunction with the storage medium 406) to perform a particular process, function, step and/or routine according to various features described herein.

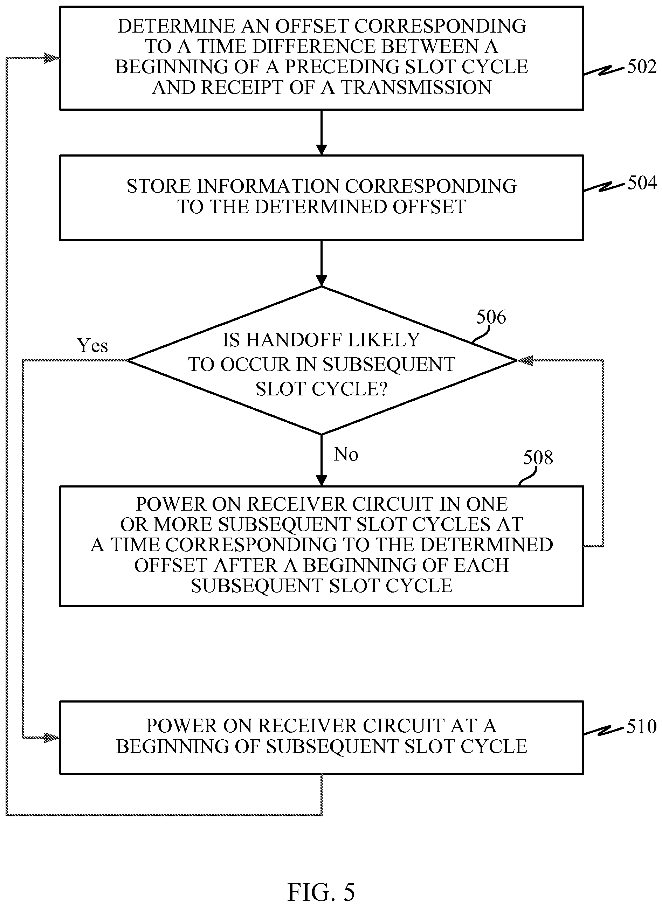

In operation, the access terminal 400 is adapted to adjust its wakeup time in the slotted idle mode in response to an offset associated with the active base station. FIG. 5 is a flow diagram illustrating at least one example of a method operational on an access terminal, such as the access terminal 400. Referring to FIGS. 4 and 5, an access terminal 400 can determine an offset corresponding to a time difference between a beginning of a preceding idle mode slot cycle and receipt of a transmission, at step 502. For example, the processing circuit 402 (e.g., the slotted idle mode circuit/module 408) executing the slotted idle mode operations 414 may determine the offset corresponding to a delay between the beginning of a first slot cycle (e.g., the SCC cycle boundary) and the receipt of a first packet.

In at least one example, the processing circuit 402 (e.g., the slotted idle mode circuit/module 408) executing the slotted idle mode operations 414 may make such a determination by powering on the receiver circuit 410 of the communications interface 404 at the beginning of the first slot cycle (e.g., the SCC cycle boundary). In various embodiments, powering on the receiver circuit 410 may include the processing circuit 410 applying power to the receiver circuit 410, instructing another circuit to apply power to the receiver circuit 410, instructing the receiver circuit 410 to power on, or any other suitable way to power on the receiver circuit 410.

With the receiver circuit 410 powered on, the processing circuit 402 (e.g., the slotted idle mode circuit/module 408) executing the slotted idle mode operations 414 can receive a transmission including a packet via the communications interface 404. The processing circuit 402 (e.g., the slotted idle mode circuit/module 408) executing the slotted idle mode operations 414 can then measure, calculate or otherwise determine the amount of time (e.g., the number of slots) between the beginning of the first slot cycle and the receipt of the packet transmission.

At 504, the access terminal 400 can store information corresponding to the determined offset. For example the processing circuit 402 (e.g., the slotted idle mode circuit/module 408) executing the slotted idle mode operations 414 can store the offset value in the storage medium 406. As noted previously, each base station in a wireless communications network may employ a different offset. In general, however, there is a relatively low probability that the access terminal 400 will move to a new base station between consecutive awake states, and the access terminal 400 will typically be receiving control channel packets from the same base station. As a result, the access terminal 400 can employ the saved offset to delay powering on the receiver circuit 410 by a duration of the saved offset for each idle mode slot cycle.

There is, however, a possibility that the access terminal 400 can move to a new base station between consecutive awake states. Accordingly, the access terminal 400 can be adapted to predict whether a handoff will occur. For example, at step 506, the access terminal 400 can determine whether a handoff is likely to occur in the subsequent slot cycle. In at least one implementation, the processing circuit 402 (e.g., the slotted idle mode circuit/module 408) executing the slotted idle mode operations 414 can make such a prediction.

A prediction whether a handoff will occur may be based on channel conditions during the wake up state associated with the preceding slot cycle. For example, the processing circuit 402 (e.g., the slotted idle mode circuit/module 408) executing the slotted idle mode operations 414 can check channel conditions, such as the measured pilot energy of cells in an active set and/or candidate set associated with the access terminal 400. An active set refers to a list of one or more cells or sectors that currently have an established communication session with the access terminal 400. A candidate set refers to a list of one or more cells or sectors that, based on channel measurements, the access terminal 400 considers to be candidates for handoff.

In at least one example, the access terminal 400 may predict that a handoff is likely to occur when the pilot energy for the one or more cells in the active set is less than a predetermined threshold. For instance, the processing circuit 402 (e.g., the slotted idle mode circuit/module 408) executing the slotted idle mode operations 414 may determine the pilot energy for the one or more cells in the active set. When the determined pilot energy is less than a predetermined threshold, the processing circuit 402 (e.g., the slotted idle mode circuit/module 408) executing the slotted idle mode operations 414 may predict that a handoff is likely to occur in the subsequent slot cycle. By way of example and not limitation, the predetermined threshold for one or more implementations may be in a range of thresholds between about -4dB and about -9dB. In at least one example, the predetermined threshold may be about -7dB.

In at least one example, the access terminal 400 may predict a handoff is likely to occur when the pilot energy for at least one cell in the candidate set is greater than the pilot energy for the one or more cells of the active set. For instance, the processing circuit 402 (e.g., the slotted idle mode circuit/module 408) executing the slotted idle mode operations 414 may determine the pilot energy for the one or more cells in the active set, and for the one or more cells in the candidate set. When the determined pilot energy of at least one cell in the candidate set is greater than the determined pilot energy of the one or more cells of the active set, the processing circuit 402 (e.g., the slotted idle mode circuit/module 408) executing the slotted idle mode operations 414 may predict that a handoff is likely to occur in the subsequent slot cycle.

When the access terminal 400 determines that a handoff is not likely to occur at step 506, then the access terminal 400 may, at step 508, power on the receiver circuit 410 for one or more subsequent slot cycles at a time corresponding to the offset determined at step 502 after the beginning of each subsequent slot cycle. That is, the processing circuit 402 (e.g., the slotted idle mode circuit/module 408) executing the slotted idle mode operations 414 may power on the receiver circuit 410 of the communications interface 404 after the slot cycle boundary at a time corresponding to the determined offset for one or more subsequent slot cycles. As noted above, powering on the receiver circuit 410 may include the processing circuit 410 applying power to the receiver circuit 410, instructing another circuit to apply power to the receiver circuit 410, instructing the receiver circuit 410 to power on, or any other suitable way to power on the receiver circuit 410. At the end of the slot cycle at step 508, the access terminal 400 can return to step 506 to determine whether a handoff is likely to occur in the subsequent slot cycle.

On the other hand, when the access terminal 400 determines that a handoff is likely to occur at step 506, the access terminal 400 may, at step 510, power on the receiver circuit 410 at a beginning of the subsequent slot cycle. That is, the processing circuit 402 (e.g., the slotted idle mode circuit/module 408) executing the slotted idle mode operations 414 can power on the receiver circuit 410 of the communications interface 404 at the slot cycle boundary. In this example, the subsequent slot cycle may become a new preceding slot cycle, and the access terminal 400 can return to step 502 to determine an offset, as described above.

By employing one or more aspects of the present disclosure, access terminals can increase the duration of the sleep state in a slotted idle mode, while conversely decreasing the duration of the awake state. For instance, in examples where the offset is 1, 2, or 3 slots, the duration of the sleep state can be respectively increased by 1.67 milliseconds (ms), 3.33 ms, or 5 ms in each slot cycle. Such increases in sleep state duration can result in significant power savings, and increase the operating life of a limited power source between charges.

While the above discussed aspects, arrangements, and embodiments are discussed with specific details and particularity, one or more of the components, steps, features and/or functions illustrated in FIGS. 1, 2, 3, 4, and/or 5 may be rearranged and/or combined into a single component, step, feature or function or embodied in several components, steps, or functions. Additional elements, components, steps, and/or functions may also be added or not utilized without departing from the present disclosure. The apparatus, devices and/or components illustrated in FIGS. 1 and/or 4 may be configured to perform or employ one or more of the methods, features, parameters, and/or steps described in FIGS. 2, 3, and/or 5. The novel algorithms described herein may also be efficiently implemented in software and/or embedded in hardware.

While features of the present disclosure may have been discussed relative to certain embodiments and figures, all embodiments of the present disclosure can include one or more of the advantageous features discussed herein. In other words, while one or more embodiments may have been discussed as having certain advantageous features, one or more of such features may also be used in accordance with any of the various embodiments discussed herein. In similar fashion, while exemplary embodiments may have been discussed herein as device, system, or method embodiments, it should be understood that such exemplary embodiments can be implemented in various devices, systems, and methods.

Also, it is noted that at least some implementations have been described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function. The various methods described herein may be partially or fully implemented by programming (e.g., instructions and/or data) that may be stored in a machine-readable, computer-readable, and/or processor-readable storage medium, and executed by one or more processors, machines and/or devices.

Those of skill in the art would further appreciate that the various illustrative logical blocks, modules, circuits, and algorithm steps described in connection with the embodiments disclosed herein may be implemented as hardware, software, firmware, middleware, microcode, or any combination thereof. To clearly illustrate this interchangeability, various illustrative components, blocks, modules, circuits, and steps have been described above generally in terms of their functionality. Whether such functionality is implemented as hardware or software depends upon the particular application and design constraints imposed on the overall system.

The various features associate with the examples described herein and shown in the accompanying drawings can be implemented in different examples and implementations without departing from the scope of the present disclosure. Therefore, although certain specific constructions and arrangements have been described and shown in the accompanying drawings, such embodiments are merely illustrative and not restrictive of the scope of the disclosure, since various other additions and modifications to, and deletions from, the described embodiments will be apparent to one of ordinary skill in the art. Thus, the scope of the disclosure is only determined by the literal language, and legal equivalents, of the claims which follow.

## Claims

1. An access terminal (104, 400), **characterised by**:
means for determining (502) an offset corresponding to a time difference between a beginning of a preceding idle mode slot cycle and receipt of a transmission; and
means for powering on (508) a receiver circuit (410) in one or more subsequent idle mode slot cycles at a time corresponding to the offset after a beginning of each subsequent slot cycle.

2. The access terminal (104, 400) of claim 1, wherein the means for determining an offset corresponding to a time difference between the beginning of the preceding idle mode slot cycle and receipt of the first packet comprises:
means for powering on the receiver circuit (410) at the beginning of the preceding slot cycle;
means for receiving the transmission; and
means for measuring a number of slots between the beginning of the preceding slot cycle and receipt of the transmission.

3. The access terminal (104, 400) of claim 1, further comprising:
means for predicting (506) whether a handoff will occur in a subsequent slot cycle; and
means for powering on (510) the receiver circuit (410) at a beginning of the subsequent slot cycle when a handoff is predicted to occur in the subsequent slot cycle.

4. The access terminal (104, 400) of claim 3, wherein the means for predicting whether a handoff will occur in a subsequent slot cycle comprises:
means for determining a pilot energy of at least one cell in an active set for the access terminal (104, 400); and
means for predicting that a handoff will occur when the determined pilot energy is less than a predetermined threshold.

5. The access terminal (104, 400) of claim 4, wherein the predetermined threshold is selected from a range between -4dB and -9dB.

6. The access terminal (104, 400) of claim 3, wherein the means for predicting whether a handoff will occur in a subsequent slot cycle comprises:
means for determining a pilot energy of at least one cell in an active set for the access terminal (104, 400);
means for determining a pilot energy of at least one cell in a candidate set for the access terminal (104, 400); and
means for predicting that a handoff will occur when the determined pilot energy of the at least one cell in the candidate set is greater than the determined pilot energy of the at least one cell in the active set.

7. A method operational on an access terminal (104, 400), **characterised by**:
determining (502) an offset corresponding to a time difference between a beginning of a preceding idle mode slot cycle and receipt of a transmission; and
powering on (508) a receiver circuit (410) in one or more subsequent idle mode slot cycles at a time corresponding to the offset after a beginning of each subsequent slot cycle.

8. The method of claim 7, wherein determining an offset corresponding to a time difference between the beginning of the preceding idle mode slot cycle and receipt of the first packet comprises:
powering on the receiver circuit (410) at the beginning of the preceding slot cycle;
receiving the transmission; and
measuring a number of slots between the beginning of the preceding slot cycle and receipt of the transmission.

9. The method of claim 7, further comprising:
predicting (506) whether a handoff will occur in a subsequent slot cycle; and
powering on (510) the receiver circuit (410)at a beginning of the subsequent slot cycle when a handoff is predicted to occur in the subsequent slot cycle.

10. The method of claim 9, wherein predicting whether a handoff will occur in a subsequent slot cycle comprises:
determining a pilot energy of at least one cell in an active set for the access terminal (104, 400); and
predicting that a handoff will occur when the determined pilot energy is less than a predetermined threshold.

11. The method of claim 10, wherein predicting that a handoff will occur when the determined pilot energy is less than a predetermined threshold comprises:
predicting that a handoff will occur when the determined pilot energy is less than the predetermined threshold selected from a range of values between -4dB and -9dB.

12. The method of claim 9, wherein predicting whether a handoff will occur in a subsequent slot cycle comprises:
determining a pilot energy of at least one cell in an active set for the access terminal (104, 400);
determining a pilot energy of at least one cell in a candidate set for the access terminal (104, 400); and
predicting that a handoff will occur when the determined pilot energy of the at least one cell in the candidate set is greater than the determined pilot energy of the at least one cell in the active set.

13. The method of claim 7, wherein powering on the receiver circuit (410) in one or more subsequent idle mode slot cycles at a time corresponding to the determined offset after a beginning of each subsequent slot cycle comprises:
powering on the receiver circuit (410) in a plurality of subsequent idle mode slot cycles at a time corresponding to the determined offset after a beginning of each subsequent slot cycle.

14. The access terminal (104, 400) according to claim 1, comprising:
a communications interface (404) including a receiver circuit (410); wherein the processing circuit comprises means for determining (502) an offset corresponding to a time difference between a beginning of the preceding idle mode slot cycle and receipt of the transmission and means for powering on (508) the receiver circuit (410) in one or more subsequent idle mode slot cycles at a time corresponding to the offset after a beginning of each subsequent slot cycle.

15. A processor-readable storage medium (406), comprising programming for causing a processing circuit (402) to perform each of the method steps of claims 7 to 13.

## Patentansprüche

1. Ein Zugriffsendgerät (104, 400), das **gekennzeichnet ist durch**:
Mittel zum Bestimmen (502) eines Versatzes, der einer Zeitdifferenz zwischen einem Beginn eines vorhergehenden Ruhemodusschlitzzyklus und einem Empfang einer Sendung entspricht; und
Mittel zum Anschalten (508) eines Empfängerschaltkreises (410) in einem oder mehreren nachfolgenden Ruhemodusschlitzzyklen zu einer Zeit, die dem Versatz entspricht, nach einem Beginn jedes nachfolgenden Schlitzzyklus.

2. Zugriffsendgerät (104, 400) nach Anspruch 1, wobei die Mittel zum Bestimmen eines Versatzes entsprechend einer Zeitdifferenz zwischen dem Beginn des vorhergehenden Ruhemodusschlitzzyklus und dem Empfang des ersten Pakets Folgendes aufweist:
Mittel zum Anschalten der Empfängerschaltung (410) an dem Beginn des vorhergehenden Schlitzzyklus;
Mittel zum Empfangen der Sendung; und
Mittel zum Messen einer Anzahl von Schlitzen zwischen dem Beginn des vorhergehenden Schlitzzyklus und dem Empfang der Sendung.

3. Zugriffsendgerät (104, 400) nach Anspruch 1, das weiter Folgendes aufweist:
Mittel zum Vorhersagen (506), ob ein Handoff bzw. eine Übergabe in einem nachfolgenden Schlitzzyklus auftreten wird; und
Mittel zum Anschalten (510) der Empfängerschaltung (410) an einem Beginn des nachfolgenden Schlitzzyklus, wenn vorhergesagt wird, dass eine Übergabe in dem nachfolgenden Schlitzzyklus auftreten wird.

4. Zugriffsendgerät (104, 400) nach Anspruch 3, wobei die Mittel zum Vorhersagen, ob eine Übergabe in einem nachfolgenden Schlitzzyklus auftreten wird, Folgendes aufweisen:
Mittel zum Bestimmen einer Pilotenergie wenigstens einer Zelle in einem aktiven Satz für das Zugriffsendgerät (104, 400); und
Mittel zum Vorhersagen, dass eine Übergabe auftreten wird, wenn die bestimmte Pilotenergie geringer als ein vorbestimmter Schwellenwert ist.

5. Zugriffsendgerät (104, 400) nach Anspruch 4, wobei der vorbestimmte Schwellenwert aus einem Bereich zwischen -4dB und -9dB ausgewählt ist.

6. Zugriffsendgerät (104, 400) nach Anspruch 3, wobei die Mittel zum Vorhersagen, ob eine Übergabe in einem nachfolgenden Schlitzzyklus auftreten wird, Folgendes aufweisen:
Mittel zum Bestimmen einer Pilotenergie wenigstens einer Zelle in einem aktiven Satz für das Zugriffsendgerät (104, 400);
Mittel zum Bestimmen einer Pilotenergie wenigstens einer Zelle in einem Kandidatensatz für das Zugriffsendgerät (104, 400); und
Mittel zum Vorhersagen, dass eine Übergabe auftreten wird, wenn die bestimmte Pilotenergie der wenigstens einen Zelle in dem Kandidatensatz größer als die bestimmte Pilotenergie der wenigstens einen Zelle in dem aktiven Satz ist.

7. Ein Verfahren, das auf einem Zugriffsendgerät (104, 400) betreibbar ist, das **gekennzeichnet ist durch**:
Bestimmen (502) eines Versatzes, der einer Zeitdifferenz zwischen einem Beginn eines vorausgehenden Ruhemodusschlitzzyklus und einem Empfang einer Sendung entspricht; und
Anschalten (508) einer Empfängerschaltung (410) in einem oder mehreren nachfolgenden Ruhemodusschlitzzyklen zu einer Zeit, die dem Versatz entspricht, nach einem Beginn jedes nachfolgenden Schlitzzyklus.

8. Verfahren nach Anspruch 7, wobei das Bestimmen eines Versatzes entsprechend einer Zeitdifferenz zwischen dem Beginn des vorhergehenden Ruhemodusschlitzzyklus und einem Empfang des ersten Pakets Folgendes aufweist:
Anschalten der Empfängerschaltung (410) an dem Beginn des vorhergehenden Schlitzzyklus;
Empfangen der Sendung; und
Messen einer Anzahl von Schlitzen zwischen dem Beginn des vorhergehenden Schlitzzyklus und dem Empfang der Sendung.

9. Verfahren nach Anspruch 7, das weiter Folgendes aufweist:
Vorhersagen (506), ob ein Handoff bzw. eine Übergabe in einem nachfolgenden Schlitzzyklus auftreten wird; und
Anschalten (510) der Empfängerschaltung (410) an einem Beginn des nachfolgenden Schlitzzyklus, wenn vorhergesagt wird, dass eine Übergabe in dem nachfolgenden Schlitzzyklus auftreten wird.

10. Verfahren nach Anspruch 9, wobei das Vorhersagen, ob eine Übergabe in einem nachfolgenden Schlitzzyklus auftreten wird, Folgendes aufweist:
Bestimmen einer Pilotenergie wenigstens einer Zelle in einem aktiven Satz für das Zugriffsendgerät (104, 400); und
Vorhersagen, dass eine Übergabe auftreten wird, wenn die bestimmte Pilotenergie geringer als ein vorbestimmter Schwellenwert ist.

11. Verfahren nach Anspruch 10, wobei das Vorhersagen, dass eine Übergabe auftreten wird, wenn die bestimmte Pilotenergie geringer ist als ein vorbestimmter Schwellenwert, Folgendes aufweist:
Vorhersagen, dass eine Übergabe auftreten wird, wenn die bestimmte Pilotenergie geringer als ein vorbestimmter Schwellenwert ist, der aus einem Bereich von Werten zwischen -4dB und -9dB ausgewählt ist.

12. Verfahren nach Anspruch 9, wobei das Vorhersagen, ob eine Übergabe in einem nachfolgenden Schlitzzyklus auftreten wird, Folgendes aufweist:
Bestimmen einer Pilotenergie wenigstens einer Zelle in einem aktiven Satz für das Zugriffsendgerät (104, 400);
Bestimmen einer Pilotenergie wenigstens einer Zelle in einem Kandidatensatz für das Zugriffsendgerät (104, 400); und
Vorhersagen, dass eine Übergabe auftreten wird, wenn die bestimmte Pilotenergie der wenigstens einen Zelle in dem Kandidatensatz größer als die bestimmte Pilotenergie der wenigstens einen Zelle in dem aktiven Satz ist.

13. Verfahren nach Anspruch 7, wobei das Anschalten der Empfängerschaltung (410) in einem oder mehreren nachfolgenden Ruhemodusschlitzzyklen zu einer Zeit, die dem bestimmten Versatz entspricht, nach einem Beginn jedes nachfolgenden Schlitzzyklus Folgendes aufweist:
Anschalten der Empfängerschaltung (410) in einer Vielzahl von nachfolgenden Ruhemodusschlitzzyklen zu einer Zeit, die dem bestimmten Versatz entspricht, nach einem Beginn jedes nachfolgenden Schlitzzyklus.

14. Zugriffsendgerät (104, 400) nach Anspruch 1, das weiter Folgendes aufweist:
eine Kommunikationsschnittstelle (404), die eine Empfängerschaltung (410) beinhaltet; wobei die Verarbeitungsschaltung Mittel aufweist zum Bestimmen (502) eines Versatzes, der einer Zeitdifferenz zwischen einem Beginn des vorhergehenden Ruhemodusschlitzzyklus und einem Empfang der Sendung entspricht und Mittel zum Anschalten (508) der Empfängerschaltung (410) in einem oder mehreren nachfolgenden Ruhemodusschlitzzyklen zu einer Zeit, die dem Versatz entspricht, nach einem Beginn jedes nachfolgenden Schlitzzyklus.

15. Ein prozessorlesbares Speichermedium (406), das Programmierung aufweist um eine Verarbeitungsschaltung (402) zu veranlassen, jeden der Verfahrensschritte der Ansprüche 7 bis 13 durchzuführen.

## Revendications

1. Un terminal d'accès (104, 400), **caractérisé par** :
des moyens pour déterminer (502) un décalage correspondant à une différence de temps entre un début d'un cycle précédent de créneaux en mode veille et la réception d'une transmission ; et
des moyens pour mettre sous tension (508) un circuit récepteur (410) dans un ou plusieurs cycles de créneaux en mode veille subséquents, à un moment correspondant à ce décalage après un début de chaque cycle de créneaux subséquent.

2. Le terminal d'accès (104, 400) selon la revendication 1, dans lequel les moyens pour la détermination d'un décalage correspondant à une différence de temps entre le début du cycle de créneaux en mode veille précédent et la réception du premier paquet comprennent :
des moyens pour la mise sous tension du circuit récepteur (410) au début du cycle de créneaux précédent ;
des moyens pour la réception de la transmission ; et
des moyens pour la mesure du nombre de créneaux entre le début du cycle de créneaux précédent et la réception de la transmission.

3. Le terminal d'accès (104, 400) selon la revendication 1, comprenant en outre :
des moyens pour prédire (506) si un transfert intercellulaire va se produire dans un cycle de créneaux subséquent ; et
des moyens pour mettre sous tension (510) le circuit récepteur (410) à un début du cycle de créneaux subséquent dans le cas où il est prédit qu'un transfert intercellulaire va se produire dans le cycle de créneaux subséquent.

4. Le terminal d'accès (104, 400) selon la revendication 3, dans lequel les moyens pour la prédiction de savoir si un transfert intercellulaire va se produire dans un cycle de créneaux subséquent comprennent :
des moyens pour la détermination d'une énergie de pilote d'au moins une cellule dans un ensemble actif pour le terminal d'accès (104, 400) ; et
des moyens pour la prédiction qu'un transfert intercellulaire va se produire lorsque l'énergie de pilote déterminée est inférieure à un seuil prédéterminé.

5. Le terminal d'accès (104, 400) selon la revendication 4, dans lequel le seuil prédéterminé est choisi parmi une plage de valeurs comprises entre -4 dB et -9 dB.

6. Le terminal d'accès (104, 400) selon la revendication 3, dans lequel les moyens pour la prédiction de savoir si un transfert intercellulaire va se produire dans un cycle de créneaux subséquent comprennent :
des moyens pour la détermination d'une énergie de pilote d'au moins une cellule dans un ensemble actif pour le terminal d'accès (104, 400) ;
des moyens pour la détermination d'une énergie de pilote d'au moins une cellule dans un ensemble candidat pour le terminal d'accès (104, 400) ; et
des moyens pour la prédiction qu'un transfert intercellulaire va se produire lorsque l'énergie de pilote déterminé de la au moins une cellule dans l'ensemble candidat est supérieure à l'énergie de pilote déterminée de la au moins une cellule dans l'ensemble actif.

7. Procédé exploitable sur un terminal d'accès (104, 400), **caractérisé par** les étapes consistant à :
déterminer (502) un décalage correspondant à une différence de temps entre un début d'un cycle de créneaux en mode veille précédent et la réception d'une transmission ; et
la mise sous tension (508) d'un circuit récepteur (410) dans un ou plusieurs cycles de créneaux en mode veille subséquents à un moment correspondant au décalage après un début de chaque cycle de créneaux subséquent.

8. Procédé selon la revendication 7, dans lequel la détermination d'un décalage correspondant à une différence de temps entre le début du cycle de créneaux en mode veille précédent et la réception du premier paquet comprend :
la mise sous tension du circuit récepteur (410) au début du cycle de créneaux précédent ;
la réception de la transmission ; et
la mesure du nombre de créneaux entre le début du cycle de créneaux précédent et la réception de la transmission.

9. Procédé selon la revendication 7, comprenant en outre les étapes consistant à :
prédire (506) si un transfert intercellulaire va se produire dans un cycle de créneaux subséquent ; et
mettre sous tension (510) le circuit récepteur (410) à un début du cycle de créneaux subséquent dans le cas où il est prédit que un transfert intercellulaire va se produire dans le cycle de créneaux subséquent.

10. Procédé selon la revendication 9, dans lequel la prédiction de savoir si un transfert intercellulaire va se produire dans un cycle de créneaux subséquent comprend :
la détermination d'une énergie de pilote d'au moins une cellule dans un ensemble actif pour le terminal d'accès (104, 400) ; et
la prédiction qu'un transfert intercellulaire va se produire lorsque l'énergie de pilote déterminée est inférieure à un seuil prédéterminé.

11. Procédé selon la revendication 10, dans lequel la prédiction qu'un transfert intercellulaire va se produire lorsque l'énergie de pilote déterminée est inférieure à un seuil prédéterminé comprend l'étape consistant à :
prédire qu'un transfert intercellulaire va se produire lorsque l'énergie de pilote déterminée est inférieure au seuil prédéterminé choisi parmi une plage de valeurs comprises entre -4 dB et -9 dB.

12. Procédé selon la revendication 9, dans lequel la prédiction de savoir si un transfert intercellulaire va se produire dans un cycle de créneaux subséquent comprend :
la détermination d'une énergie de pilote d'au moins une cellule dans un ensemble actif pour le terminal d'accès (104, 400) ;
la détermination d'une énergie de pilote d'au moins une cellule dans un ensemble candidat pour le terminal d'accès (104, 400) ; et
la prédiction qu'un transfert intercellulaire va se produire lorsque l'énergie de pilote déterminé de la au moins une cellule dans l'ensemble candidat est supérieure à l'énergie de pilote déterminée de la au moins une cellule dans l'ensemble actif.

13. Procédé selon la revendication 7, dans lequel l'étape consistant à mettre sous tension le circuit récepteur (410) dans un ou plusieurs cycles subséquents de créneaux en mode veille à un moment correspondant au décalage déterminé après un début de chaque cycle de créneaux subséquent comprend :
la mise sous tension du circuit récepteur (410) dans une pluralité de cycles de créneaux en mode veille subséquents à un moment correspondant au décalage déterminé après un début de chaque cycle de créneaux subséquent.

14. Le terminal d'accès (104, 400) selon la revendication 1, comprenant :
une interface de communication (404) comprenant un circuit récepteur (410) ; dans lequel le circuit de traitement comprend des moyens pour déterminer (502) un décalage correspondant à une différence de temps entre un début d'un cycle de créneaux en mode veille précédent et la réception d'une transmission et des moyens pour la mise sous tension (508) du circuit récepteur (410) dans un ou plusieurs cycles de créneaux en mode veille subséquents à un moment correspondant au décalage après un début de chaque cycle de créneaux subséquent.

15. Un support de stockage lisible par processeur (406) comprenant de la programmation pour amener un circuit de traitement (402) à mettre en oeuvre chacun parmi les étapes de procédé des revendications 7 à 13.
